# EUROPEAN PATENT SPECIFICATION

(11) **EP 3 660 536 B1**
(45) Date of publication and mention of the grant of the patent: **28.09.2022**
(21) Application number: 18209054.8
(22) Date of filing: 29.11.2018
(51) Int. Cl.: G01S 7/00, G01S 13/931, G01S 17/931, G01S 7/497, G01S 7/40

(54) **A DATA INTERFACE FOR VEHICLE SENSOR DATA ANALYSIS**
DATENSCHNITTSTELLE FÜR FAHRZEUGSENSORDATENANALYSE
INTERFACE DE DONNÉES POUR L'ANALYSE DE DONNÉES DE CAPTEUR DE VÉHICULE

(43) Date of publication of application: 03.06.2020
(73) Proprietor: Veoneer Sweden AB, 447 83 Vårgårda (SE)
(72) Inventor: Holienka, Peter, 75385 Bad Teinach-Zavelstein (DE)
(74) Representative: Westpatent AB

(56) References cited:
- US-A1- 2006 064 206
- US-A1- 2016 031 388

## Description

### DESCRIPTION OF THE DISCLOSURE

The present disclosure relates to vehicle sensor systems, such as radio detection and ranging (radar) and light detection and ranging (lidar) systems. There are disclosed data interface arrangements for connecting an external analysis unit, such as a personal computer, smartphone or proprietary analysis device, to a vehicle sensor and signal processing system for, e.g., simulation, diagnostics, and/or analysis purposes.

Many vehicle sensor systems are arranged to scan vehicle surroundings using wide bandwidth signals and require analog to digital conversion at high resolutions. For instance, wideband radar sensors operating at carrier frequencies around 80 GHz may, after sampling by an analog to digital converter (ADC), generate digital sensor data streams at 80 MB/sec or more. Lidar sensor systems also often generate data streams at very high rates on the order of tens of MB/sec or more.

Data transport and data management is problematic and costly due to the high rates involved. Sensor signal processing systems are therefore normally implemented on custom chip sets with a reduced number of external interfaces and possibilities to access unprocessed sampled sensor data. A prior art system can be found in US2006/064206 A1 which discloses an external access to processed data via a standardised bus, e.g. CAN bus.

For simulation and analysis reasons, it is desired to be able to access sampled sensor data and relate it to signal processing status data in an electronic control unit (ECU). ECU status data of interest include, e.g., current adaptive filter states, detection lists, and various signal processing weight values. It is also often desirable to relate the sampled sensor data to vehicle parameters such as velocity, yaw-rate and acceleration. Sampled sensor data is seldom stored in buffers longer than absolutely necessary, due to the high rates and large amounts of data involved. Sampled sensor data is instead quickly overwritten in memory by more recently sampled data. It is therefore difficult to determine a time synchronization relationship between sampled sensor signal data and ECU signal processing status data.

It is an object of the present disclosure to provide improved data interface arrangements for vehicle sensor system analysis.

This object is at least partly obtained by a data interface arrangement for vehicle sensor data analysis by an external analysis device. The data interface arrangement comprises a first data connection arranged to transport sampled sensor signal data and a second data connection arranged to transport electronic control unit (ECU) status data. The sampled sensor signal data comprises a noise component. The second data connection is configured to transport synchronization segments interleaved with the ECU status data. The synchronization segments correspond to respective segments of the sampled sensor signal data, thereby enabling time synchronization between the sampled sensor signal data and the ECU status data by the external device based on the interleaved synchronization segments.

This way the high rate raw ADC data is transported over a first data connection independent of the ECU status data which is instead transported over a second connection. The two data streams are asynchronously output and synchronized a-posteriori by the external analysis unit based on the interleaved synchronization segments. The data interface does not require a large internal ECU memory buffer, which is an advantage. Also, different data connection technologies can be used for the ECU status data and the sampled sensor signal data, which is also an advantage.

According to aspects, the synchronization segments comprise segments of the sampled sensor signal data. Thus, part of the sampled sensor signal data is duplicated and interleaved with the ECU status data transmitted over the second data connection. This is a particularly efficient way to generate the synchronization segments.

According to aspects, the synchronization segments correspond to a pre-determined function of the respective segments of sampled sensor signal data. The pre-determined function may, e.g., be used to reduce overhead associated with generating, storing, and transporting the synchronization segments, which is an advantage.

According to aspects, the ECU status data comprises at least one course time stamp obtained from a free running timer, thereby enabling coarse time synchronization between the sampled sensor signal data and the ECU status data by the external device independent of the interleaved synchronization segments. Advantageously, the coarse time stamps reduce the search space of the fine-grained synchronization involving the synchronization segments.

There are also disclosed herein methods, vehicles, ECUs, computer program products, and external data analysis units associated with the above-mentioned advantages.

### BRIEF DESCRIPTION OF THE DRAWINGS

The present disclosure will now be described in detail with reference to the appended drawings, where:
Figure 1 schematically illustrates a vehicle with a sensor system;
Figures 2-3 schematically illustrate example sensor signal processing and analysis systems;
Figure 4 shows an example synchronization segment;
Figure 5 schematically illustrates a sensor system;
Figure 6 shows an example computer program product; and
Figure 7 is a flow chart illustrating methods.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention.

A central concept herein relates to the time-unique properties of most noise and interference sources. All analog sensor signals are affected by noise in some form; For instance, thermal noise, phase noise, hardware distortion, and interference from other transmitters affect the sensor signal either as an additive or as a multiplicative component. This noise is often uncorrelated in time, which means that one time-segment of noise realization is more or less unique compared to other time-segments of the same noise process; the exact same noise sequence is thus only repeated with a very small probability. The noise inherent in a segment of sampled sensor signal can therefore be used as a fingerprint to distinguish a given time segment from other time segments even if the underlying noise-free sensor signal is the same in all time segments.

A data rate is a measure of number information transported per unit of time. One example of a data rate is the number of digital bots transported per second, i.e., bits per second, or bps. Data rate can be measured including or excluding overhead such as checksums and channel code redundancy, and protocol related fields such as address fields and the like.

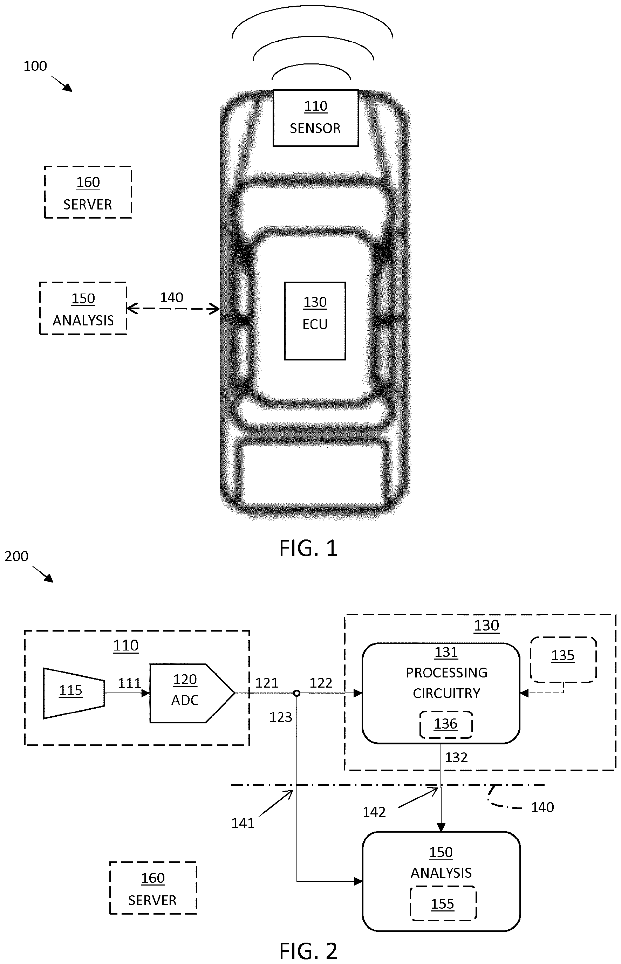

Figure 1 shows a vehicle 100 with a sensor system 110 arranged to monitor vehicle surroundings. The sensor system 110 may, e.g., comprise one or more radar or lidar sensors. The analog sensor signals are digitized by analog-to-digital converters (ADC) before being processed by one or more electronic control units (ECU) 130 comprised in the vehicle 100.

Commonly, as mentioned above, the sensor output signals after digitization are of very high rate, due to the signal bandwidths and resolutions involved. This high rate complicates data transport and data buffering in the system.

The ECU 130, in case of a radar sensor system, may perform Fourier transform processing to detect positions of objects in the vicinity of the vehicle in a known manner. Object velocities relative to the vehicle sensor can also be determined in a known manner. However, as soon as the Fourier transforms have been determined, the 'raw' sampled sensor data is often replaced by new data, making it difficult to retrieve previously sampled sensor data.

The ECU 130 comprises a plurality of signal processing functions, such as filtering and tracking functions. These signal processing functions are associated with different states, i.e., current filter states and various parameter settings. These states are referred to herein as the ECU status, which changes over time in dependence of ECU settings and driving scenario.

Figure 1 also shows an external analysis device 150 connected to the vehicle, or rather to the vehicle sensor signal processing system, via a data interface arrangement 140. It is appreciated that the external analysis unit is releasably connected to the vehicle. The connection via the data interface arrangement 140 can be wired or wireless. The connection may be direct over a single interface, or indirect over a remote server 160.

During development of new features, during trouble-shooting, and during general diagnostics of vehicle sensor systems, it is often desired to be able to record sampled sensor signal data and to relate this recorded sensor data to recorded ECU status data. For instance, the response of a certain adaptive filtering function to a particular sequence of radar sensor signal data may be of interest. During such analysis it is important to establish accurate time synchronization between the high rate sampled sensor data signal and the ECU status data. The external analysis device 150 may be used for such diagnostic operations. The external analysis device 150 may also be arranged to monitor status variables and parameters of the vehicle internal signal processing functions running on the ECU 130.

Figure 2 schematically illustrates an example sensor signal processing and analysis system 200 for use with the vehicle 100. A sensor antenna or detector 115 generates analog sensor output and forwards analog sensor signals 111 to an ADC 120. The sensor antenna or detector 115 may, e.g., be a radar antenna or a lidar detector. It is appreciated that there may be one or more sensor sub-systems arranged in a vehicle sensor system. Each sensor may comprise one or more antennas and/or detectors with respective ADCs. The aggregate rate of the ADC samples 121 quickly becomes large; the ADC may use on the order of 12 bits/sample, and sample at Gsps rates.

The sampled sensor signal data 121 is branched into two separate data streams 122, 123 which basically constitute copies of the same data stream. One such stream is fed to the ECU 130, where it is arranged to be processed by processing circuitry 131.

The ECU comprises numerous signal processing state variables and parameters which are made available over an ECU status interface. These state variables and parameters will be collectively referred to herein as ECU status data 132. The ECU status data is of comparably low rate and therefore more manageable than the high rate sampled sensor data signal 121. Also, the ECU status data is often persistent in memory, i.e., is not regularly overwritten, and therefore more easily accessed over an external interface.

The sampled sensor signal 121 is difficult to handle from a data interface point of view. It would require a large and fast data buffer to store only parts of the sampled sensor data signal, and a high-speed data conduit through the signal processing circuitry 131 to be able to output the sampled sensor data from the signal processing circuitry on the same interface as the ECU status data 132.

The data interface arrangements disclosed herein therefore comprise two separate data connections; a first data connection 141 is arranged to transport asynchronous high rate sampled sensor signal data 123, and a second data connection 142 is arranged to transport ECU status data 132.

According to aspects, the first data connection 141 is based on a low-voltage differential signal (LVDS). The LVDS signal may be branched using circuitry of low complexity and power consumption in a known manner, which is an advantage.

According to some further aspects, the second data connection 142 is based on a Gigabit Ethernet, GbE, data connection or a connection based on BroadR-Reach.

BroadR-Reach data connections are based on an Ethernet physical layer standard designed for use in automotive connectivity applications. BroadR-Reach technology allows multiple in-vehicle systems to simultaneously access information over an unshielded single twisted pair cable.

According to the present teaching, there is no need for time reference information to be comprised in the sampled sensor signal data transported over the first data connection 141, which is an advantage.

The sampled sensor signal data comprises noise and/or interference. For instance, the sampled sensor signal may comprise any combination of thermal noise, hardware related distortion, and interference from external sources. As mentioned above, this noise is often almost spectrally flat, or is at least not strongly correlated over time. For instance, thermal noise can often be modelled as white Gaussian noise, which is uncorrelated over time.

It has been realized that the noise or distortion component can be used for synchronization purposes, by interleaving shorter segments of sampled sensor signal data, or functions thereof, with the ECU status data transported over the second data connection, the external device 150 may perform post-processing to time-align the data streams on the first and on the second data connection by comparing the sampled sensor signal data received via the first data connection 141 to the segments of sampled sensor signal interleaved with the ECU status data received via the second data connection 142. When the external device finds a match between the data on the first data connection and the interleaved segments, time synchronization has been achieved.

In other words, Figure 2 illustrates a data interface arrangement 140 for vehicle sensor data analysis by an external analysis device 150. The data interface arrangement comprises a first data connection 141 arranged to transport sampled sensor signal data 123 and a second data connection 142 arranged to transport ECU status data 132. The sampled sensor signal data comprises noise and/or interference. The second data connection 142 is configured to transport synchronization segments interleaved with the ECU status data. The synchronization segments correspond to respective segments of the sampled sensor signal data, thereby enabling time synchronization between the sampled sensor signal data and the ECU status data by the external device 150 based on the interleaved synchronization segments. Thus, no explicit time stamps or synchronization data is necessary to include over the high rate first data connection 141, since the sampled sensor data itself is used for synchronization purposes, exploiting the time correlation properties of the noise comprised in the sampled sensor data. No high rate data conduit through the processing circuitry 131 is required since only shorter segments of the ADC data are interleaved with the ECU status data.

According to aspects, the length of a synchronization segment is determined based on the autocorrelation properties of the noise component comprised in the sampled sensor signal data. Longer sequences are required in case the noise is correlated over time, and shorter segments are required if the noise is relatively uncorrelated in time.

It is appreciated that the synchronization segments comprise the noise, or the sensor data comprising the noise, or a function of the noise. All that is required is that the external device 150 is able to extract the synchronization segments interleaved in the ECU status data, and to generate corresponding synchronization segments from the sampled sensor signal data received over the first data connection 141, in order to be able to perform time synchronization.

Thus, according to some aspects, the synchronization segments comprise copied segments of the sampled sensor signal data.

According to some other aspects, the synchronization segments correspond to a pre-determined function of respective segments of sampled sensor signal data. This pre-determined function may, e.g., be a hash-function, fingerprinting function, imaging function, or the like, which can be applied by the external device 150 to the data received over the first data connection 141.

According to aspects, the ECU status data comprises at least one course time stamp obtained from a free running timer 135, thereby enabling coarse time synchronization between the sampled sensor signal data and the ECU status data by the external device 150 independent of the interleaved synchronization segments. The course synchronization reduces the search space for the fine synchronization based on the synchronization segments. This allows for a more computationally efficient synchronization process.

According to some aspects, the ECU status data comprises data related to one or more sensor object detections. Object detections may comprise relative object locations and velocities.

According to some further aspects, the ECU status data comprises data related to any of a vehicle heading, a vehicle velocity, a vehicle acceleration, a vehicle yaw rate, a vehicle turn angle, a vehicle status signal, an adaptive filter state, a signal processing status value, and/or a signal processing parameter value.

The external analysis device 150 comprises a corresponding data interface arrangement 140 according to the discussion above. Consequently, the external analysis device 150 is communicatively coupled to the ECU 130 and to the sensor 110.

According to aspects, the external analysis device 150 comprises a time synchronization module 155 arranged to time-synchronize the sampled sensor signal data on the first data connection 141 to the ECU status data on the second data connection 142.

According to aspects, the synchronization module 155 is configured to detect a course time stamp comprised in the ECU status data, and to time align the ECU status data with the sampled sensor signal data based on the course time stamp and on a reception time of the sampled sensor signal data.

The analysis device may comprise two or more parts, where a first part may apply coarse time stamps, and where a second part may perform fine synchronization using the synchronization segments.

According to aspects, the synchronization module 155 is configured to detect at least one of the segments of the sampled sensor signal data interleaved with the ECU status data, and to compare the detected segment to the sampled sensor signal data, and to time-synchronize the sampled sensor signal data on the first data connection 141 to the ECU status data on the second data connection 142 based on the comparison.

The search can be implemented by a correlator function which computes time correlation between the synchronization segments in the ECU status data and the sampled signal data from the ADC 120. When this function has a maximum value, or a peak, synchronization has been found.

A comparison can also be implemented, which simply determines a difference value between the synchronization segments interleaved in the ECU status data and the sampled signal data. A small difference, or a total match, indicates the correct time synchronization offset between the two data streams.

It is appreciated that bit-errors may occur one the first and/or second data connection. This means that some discrepancy between the sampled sensor signal data and the corresponding synchronization segments may need to be tolerated.

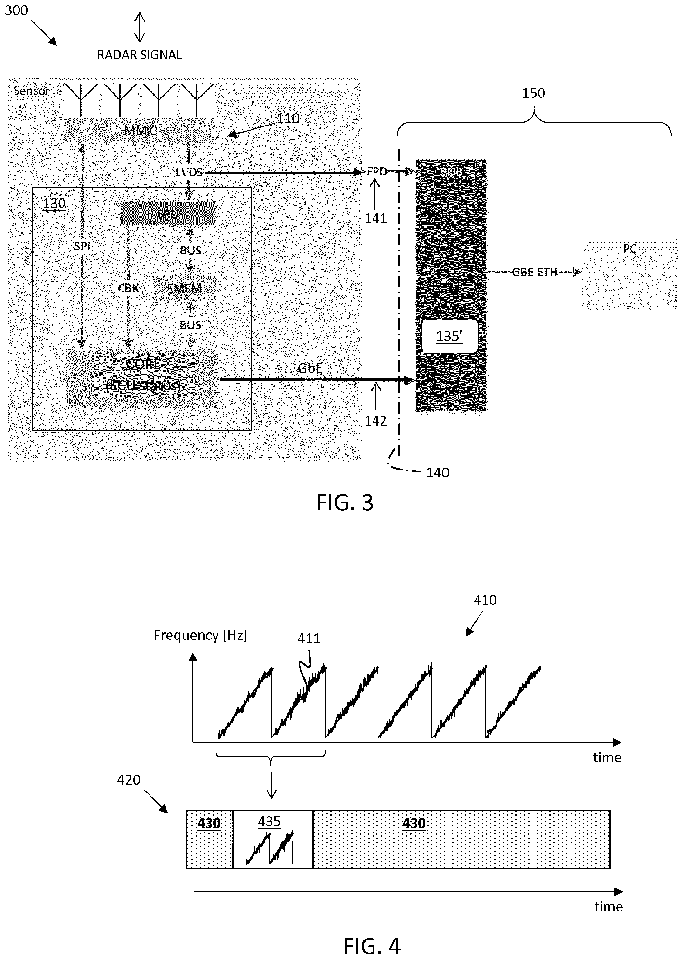

Figure 3 schematically illustrates another example sensor signal processing and analysis system. Here, the sensor 110 is a radar sensor comprising a monolithic microwave integrated circuit (MMIC). The radar system is a frequency modulated continuous wave (FMCW) radar system which repeatedly transmits linear frequency sweeps, i.e. frequency ramps. The sweeps are grouped into super-pulses having a duration of about 5 ms.

The MMIC is connected via LVDS to a signal processing unit (SPU) comprised in the ECU 130. The MMIC is also connected via a serial peripheral interface (SPI), which is a relatively low rate connection, to a processing core (CORE). The LVDS interface is branched to a break-out board (BOB), via a Front Panel Display (FPD) signal. The BOB is then connected to a personal computer (PC) via GbE.

The ECU status data is transferred to the BOB via GbE, or BroadR-Reach from the CORE to the BOB.

This way complete ADC data and ECU status data is available, but separated into two streams, which are independent of each other when it comes to time synchronization. It is an object of the present disclosure to enable synchronization of these two streams in an accurate and efficient manner.

It is appreciated that the data communication connections shown in Figure 3 are just example connections, there are many suitable data communication technologies which can be used for the different connections.

The BOB does not have any context or other information related to how to synchronize ADC data received over the first data connection 141 with ECU status data received over the second data connection 142 and does not have any information which ADC time segments that belongs to which ECU status data contents.

According to an example, the synchronization is done in two steps:
First an optional coarse synchronization is performed by timestamps added by the BOB to received data over the first and second data connections. The BOB stamps or marks each radar super pulse (group of transmitted radar signal components) using a free running hardware timer 135'. Thus, it is appreciated that the hardware timer may optionally be located in the external analysis device 150.

ADC data packets are stamped with the value of free running timer 135' when the first ADC data bit reaches BOB over the FPD link.

ECU status data packets are stamped in BOB, immediately after they are received in BOB over the GbE interface.

The streams over the first 141 and second 142 data connections are the coarsely synchronized by the BOB timestamps in the recording tool on PC, which together with the BOB constitutes the external device 150.

Coarse synchronization by the BOB timestamp can synchronize the sampled sensor signal data and the ECU status data up to a small difference of a couple ms. However, this synchronization accuracy is often not sufficient for many analysis purposes. Therefore, a fine synchronization using ADC noise mixed into or interleaved with the ECU status data is performed, according to the principles discussed above;

ADC data is a result of conversion of real voltages measured on antenna into digital values. The antennas interact with real world, thus the values measured on them comprise noise, distortion and interference as discussed above. This signal noise makes the measured values unique in time, with high probability.

The first two frequency sweep ramps of each super pulse are copied into a memory storage (EMEM), where the CORE has access for a short time prior to the start of SPU processing which locks EMEM to devices other than the SPU.

The SPU executes a callback, when the data is ready in EMEM, but before the EMEM is locked. This callback is sent to the CORE via the callback (CBK) interface.

In the callback function the system selects appropriate parts of ADC data and copies the data into an intermediate fast memory buffer

The content of the intermediate memory buffer is aligned in time with the processing tasks performed by, e.g., the SPU.

According to some aspects, each super pulse is represented by one noise slot or segment. The selected noise parts are copied into respective slots in the ECU status data. More than one noise slot can also be used if, e.g., time correlation properties of the noise makes this necessary.

The content of the noise slots is sent out from the ECU over GbE 142 cyclically and recorded by the external device 150.

During synchronization, the PC searches the ADC data stream for the time-unique signal noise snippets stored in the noise slots in the ECU status data.

The search can be implemented by a correlator function or comparison function, as discussed above.

Figure 4 is a conceptual view of the proposed technique. Taking FMCW radar as an example, frequency ramps 410 are detected over time. The frequency ramps comprise noise 411, which is indicated as a slight jaggedness to the frequency ramps. This noise can be, e.g., thermal noise, phase noise, or other types of distortion.

Segments 435 of the sampled sensor signal are extracted and interleaved with the ECU status data 430, before sending the ECU status data stream 420 over the second data connection. These segments constitute example synchronization segments.

It is appreciated that, since the noise segment 435 with high probability possesses time-unique properties, synchronization can be performed by comparing synchronization segments to the sampled sensor signal data.

The content in the synchronization segments does not necessarily have to be the actual sampled sensor signal data. Derivatives of the sensor data can also be used for the same purpose, as long as the noise component is not overly suppressed. For instance, the frequency ramp signal can be demodulated, leaving only the noise component without the frequency sweep. A function, such as a hash function, can also be determined based on the sampled sensor signal and the result interleaved with the ECU status data. The external device then needs to determine the same function using the sampled sensor signal data as input and compare the output from that function to the interleaved synchronization segments received over the second data connection.

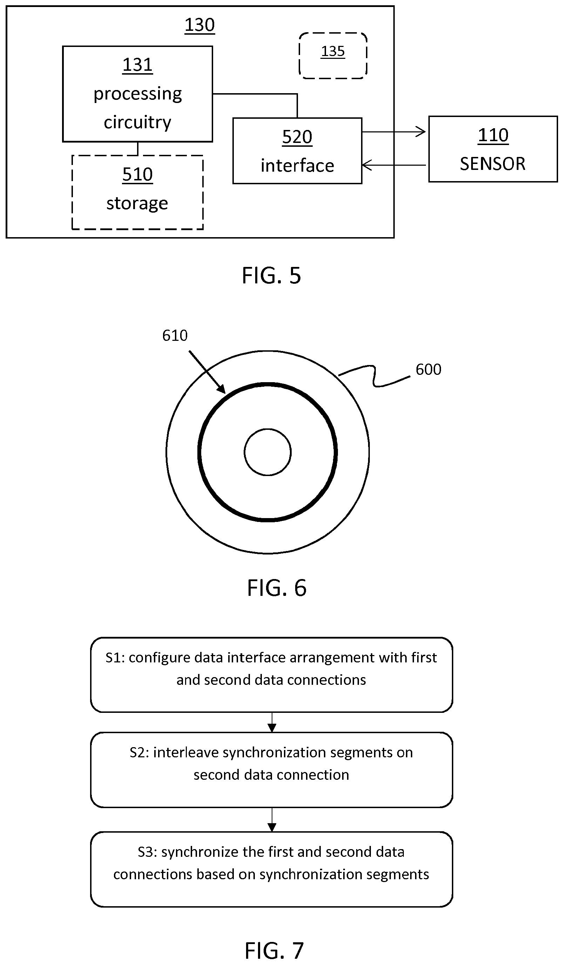

Figure 5 schematically illustrates, in terms of a number of functional units, the components of an example control unit 130 according to an embodiment of the discussions herein. Processing circuitry 131 is provided using any combination of one or more of a suitable central processing unit CPU, multiprocessor, microcontroller, digital signal processor DSP, etc., capable of executing software instructions stored in a computer program product, e.g. in the form of a storage medium 510, such as the EMEM discussed in connection to Figure 3 above. The processing circuitry 131 may further be provided as at least one application specific integrated circuit ASIC, or field programmable gate array FPGA. The processing circuitry thus comprises a plurality of digital logic components.

Particularly, the processing circuitry 131 is configured to cause the control unit 130 to perform a set of operations, or steps. For example, the storage medium 510 may store the set of operations, and the processing circuitry 131 may be configured to retrieve the set of operations from the storage medium 510 to cause the control unit 130 to perform the set of operations. The set of operations may be provided as a set of executable instructions. Thus, the processing circuitry 131 is thereby arranged to execute methods as herein disclosed.

The storage medium 510 may also comprise persistent storage, which, for example, can be any single one or combination of magnetic memory, optical memory, solid state memory or even remotely mounted memory.

The control unit 130 further comprises an interface 520 for communications with at least one external device, such as the vehicle sensor 110. As such the interface 520 may comprise one or more transmitters and receivers, comprising analogue and digital components and a suitable number of ports for wireline communication.

The processing circuitry 131 controls the general operation of the transceiver, e.g. by sending data and control signals to the interface 520 and the storage medium 510, by receiving data and reports from the interface 520, and by retrieving data and instructions from the storage medium 510. Other components, as well as the related functionality, of the control node are omitted in order not to obscure the concepts presented herein.

Figure 6 shows a computer program product 600 comprising computer executable instructions 610 to execute any of the methods disclosed herein.

Figure 7 shows a flow chart illustrating a method for transferring data between a vehicle sensor system and an external analysis device 150. The method comprises
configuring S1 a data interface arrangement comprising a first data connection 141 arranged to transport sampled sensor signal data and a second data connection 142 arranged to transport electronic control unit, ECU, status data, wherein the sampled sensor signal data comprises noise and/or interference,
interleaving S2 synchronization segments with the ECU status data on the second data connection 142, wherein the synchronization segments correspond to respective segments of the sampled sensor signal data, and
time synchronizing S3 the sampled sensor signal data and the ECU status data based on the interleaved synchronization segments.

## Claims

1. A data interface arrangement (140) for vehicle sensor data analysis by an external analysis device (150), the data interface arrangement comprising a first data connection (141) arranged to transport sampled sensor signal data and a second data connection (142) arranged to transport electronic control unit, ECU, status data, wherein the ECU comprises a plurality of signal processing functions, such as filtering and tracking functions, wherein the sampled sensor signal data comprises sampled radar or lidar signal data, and the sampled sensor signal data comprises a noise component, wherein the second data connection (142) is configured to transport synchronization segments interleaved with the ECU status data, wherein the synchronization segments correspond to respective segments of the sampled sensor signal data, thereby enabling time synchronization between the sampled sensor signal data and the ECU status data by the external device (150) based on the interleaved synchronization segments.

2. The data interface arrangement (140) according to claim 1, wherein the synchronization segments comprise segments of the sampled sensor signal data.

3. The data interface arrangement (140) according to claim 1, wherein the synchronization segments correspond to a pre-determined function of the respective segments of sampled sensor signal data.

4. The data interface arrangement (140) according to any previous claim, wherein the ECU status data comprises at least one course time stamp obtained from a free running timer (135, 135'), thereby enabling coarse time synchronization between the sampled sensor signal data and the ECU status data by the external device (150) independent of the interleaved synchronization segments.

5. The data interface arrangement (140) according to any previous claim, wherein the ECU status data comprises data related to one or more sensor object detections.

6. The data interface arrangement (140) according to any previous claim, wherein the ECU status data comprises data related to any of a vehicle heading, a vehicle velocity, a vehicle acceleration, a vehicle yaw rate, a vehicle turn angle, a vehicle status signal, a signal filter state, a signal processing status, a signal processing parameter.

7. The data interface arrangement (140) according to any previous claim, wherein the first data connection is based on a low-voltage differential signal, LVDS.

8. The data interface arrangement (140) according to any previous claim, wherein the second data connection is based on a Gigabit Ethernet, GbE, data connection or a connection based on BroadR-Reach.

9. A vehicle electronic control unit, ECU, (130) comprising a data interface arrangement (140) according to any previous claim.

10. A method for transferring data between a vehicle sensor system and an external analysis device (150), the method comprising; configuring (S1) a data interface arrangement comprising a first data connection (141) arranged to transport sampled sensor signal data and a second data connection (142) arranged to transport electronic control unit, ECU, status data, wherein the ECU comprises a plurality of signal processing functions, such as filtering and tracking functions, wherein the sampled sensor signal data comprises sampled radar or lidar signal data, and the sampled sensor signal data comprises noise and/or interference, interleaving (S2) synchronization segments with the ECU status data on the second data connection (142), wherein the synchronization segments correspond to respective segments of the sampled sensor signal data, and time synchronizing (S3) the sampled sensor signal data and the ECU status data based on the interleaved synchronization segments.

## Patentansprüche

1. Datenschnittstellenanordnung (140) zur Fahrzeugsensordatenanalyse durch eine externe Analysevorrichtung (150), die Datenschnittstellenanordnung umfassend eine erste Datenverbindung (141), die angeordnet ist, um abgetastete Sensorsignaldaten zu transportieren, und eine zweite Datenverbindung (142), die angeordnet ist, um Statusdaten einer elektronischen Steuereinheit, ECU, zu transportieren, wobei die ECU eine Vielzahl von Signalverarbeitungsfunktionen, wie Filter- und Verfolgungsfunktionen, umfasst, wobei die abgetasteten Sensorsignaldaten abgetastete Radar- oder Lidarsignaldaten umfassen, und die abgetasteten Sensorsignaldaten eine Rauschkomponente umfassen, wobei die zweite Datenverbindung (142) konfiguriert ist, um Synchronisationssegmente zu transportieren, die mit den ECU-Statusdaten ineinander geschachtelt sind, wobei die Synchronisationssegmente den jeweiligen Segmenten der abgetasteten Sensorsignaldaten entsprechen, wodurch die Zeitsynchronisation zwischen den abgetasteten Sensorsignaldaten und den ECU-Statusdaten durch die externe Vorrichtung (150) basierend auf den ineinander geschachtelten Synchronisationssegmenten ermöglicht wird.

2. Datenschnittstellenanordnung (140) nach Anspruch 1, wobei die Synchronisationssegmente Segmente der abgetasteten Sensorsignaldaten umfassen.

3. Datenschnittstellenanordnung (140) nach Anspruch 1, wobei die Synchronisationssegmente einer vorbestimmten Funktion der jeweiligen Segmente von abgetasteten Sensorsignaldaten entsprechen.

4. Datenschnittstellenanordnung (140) nach einem der vorstehenden Ansprüche, wobei die ECU-Statusdaten mindestens einen Verlaufszeitstempel umfassen, der von einem freien Laufzeitgeber (135, 135') erhalten wird, wodurch eine Grobzeitsynchronisation zwischen den abgetasteten Sensorsignaldaten und den ECU-Statusdaten durch die externe Vorrichtung (150) unabhängig von den ineinander geschachtelten Synchronisationssegmenten ermöglicht wird.

5. Datenschnittstellenanordnung (140) nach einem der vorstehenden Ansprüche, wobei die ECU-Statusdaten Daten umfassen, die sich auf eine oder mehrere Sensorobjekterfassungen beziehen.

6. Datenschnittstellenanordnung (140) nach einem der vorstehenden Ansprüche, wobei die ECU-Statusdaten Daten umfassen, die sich auf ein beliebiges einer Fahrzeugfahrtrichtung, einer Fahrzeuggeschwindigkeit, einer Fahrzeugbeschleunigung, einer Fahrzeuggierrate, eines Fahrzeugdrehwinkels, eines Fahrzeugstatussignals, eines Signalfilterstatus, eines Signalverarbeitungsstatus, eines Signalverarbeitungsparameters beziehen.

7. Datenschnittstellenanordnung (140) nach einem der vorstehenden Ansprüche, wobei die erste Datenverbindung auf einem Niederspannungsdifferentialsignal, LVDS, basiert.

8. Datenschnittstellenanordnung (140) nach einem der vorstehenden Ansprüche, wobei die zweite Datenverbindung auf einer Gigabit-Ethernet-Datenverbindung, GbE-Datenverbindung, oder einer Verbindung basierend auf BroadR-Reach basiert.

9. Fahrzeugelektroniksteuereinheit, ECU, (130), umfassend eine Datenschnittstellenanordnung (140) nach einem der vorstehenden Ansprüche.

10. Verfahren zum Übertragen von Daten zwischen einem Fahrzeugsensorsystem und einer externen Analysevorrichtung (150), das Verfahren umfassend;
Konfigurieren (S1) einer Datenschnittstellenanordnung, umfassend eine erste Datenverbindung (141), die angeordnet ist, um abgetastete Sensorsignaldaten zu transportieren, und eine zweite Datenverbindung (142), die angeordnet ist, um Statusdaten der elektronischen Steuereinheit, ECU, zu transportieren, wobei die ECU eine Vielzahl von Signalverarbeitungsfunktionen, wie Filter- und Verfolgungsfunktionen, umfasst, wobei die abgetasteten Sensorsignaldaten abgetastete Radar- oder Lidarsignaldaten umfassen und die abgetasteten Sensorsignaldaten Rauschen und/oder Interferenz umfassen,
Ineinanderschachteln (S2) von Synchronisationssegmenten mit den ECU-Statusdaten an der zweiten Datenverbindung (142), wobei die Synchronisationssegmente jeweiligen Segmenten der abgetasteten Sensorsignaldaten entsprechen, und
Zeitsynchronisieren (S3) der abgetasteten Sensorsignaldaten und der ECU-Statusdaten basierend auf den ineinander geschachtelten Synchronisationssegmenten.

## Revendications

1. Agencement d'interface de données (140) pour l'analyse de données de capteur de véhicule par un dispositif d'analyse externe (150), l'agencement d'interface de données comprenant une première connexion de données (141) agencée pour transporter des données de signal de capteur échantillonnées et une seconde connexion de données (142) agencée pour transporter des données d'état d'unité de commande électronique, ECU, dans lequel l'ECU comprend une pluralité de fonctions de traitement de signal, telles que des fonctions de filtrage et de suivi, dans lequel les données de signal de capteur échantillonnées comprennent des données de signal radar ou lidar échantillonnées, et les données de signal de capteur échantillonnées comprennent un composant de bruit, dans lequel la seconde connexion de données (142) est configurée pour transporter des segments de synchronisation entrelacés avec les données d'état d'ECU, dans lequel les segments de synchronisation correspondent à des segments respectifs des données de signal de capteur échantillonnées, permettant de ce fait une synchronisation temporelle entre les données de signal de capteur échantillonnées et les données d'état d'ECU par le dispositif externe (150) en fonction des segments de synchronisation entrelacés.

2. Agencement d'interface de données (140) selon la revendication 1, dans lequel les segments de synchronisation comprennent des segments des données de signal de capteur échantillonnées.

3. Agencement d'interface de données (140) selon la revendication 1, dans lequel les segments de synchronisation correspondent à une fonction prédéterminée des segments respectifs de données de signal de capteur échantillonnées.

4. Agencement d'interface de données (140) selon l'une quelconque revendication précédente, dans lequel les données d'état d'ECU comprennent au moins une estampille temporelle de parcours obtenue à partir d'un temporisateur à fonctionnement libre (135, 135'), permettant de ce fait une synchronisation temporelle grossière entre les données de signal de capteur échantillonnées et les données d'état d'ECU par le dispositif externe (150) indépendant des segments de synchronisation entrelacés.

5. Agencement d'interface de données (140) selon l'une quelconque revendication précédente, dans lequel les données d'état d'ECU comprennent des données apparentées à une ou plusieurs détections d'objet par le capteur.

6. Agencement d'interface de données (140) selon l'une quelconque revendication précédente, dans lequel les données d'état d'ECU comprennent des données apparentées à l'un quelconque d'un cap de véhicule, d'une vitesse de véhicule, d'une accélération de véhicule, d'un taux de lacet de véhicule, d'un angle de braquage de véhicule, d'un signal d'état de véhicule, d'un état de filtre de signal, d'un état de traitement de signal, d'un paramètre de traitement de signal.

7. Agencement d'interface de données (140) selon l'une quelconque revendication précédente, dans lequel la première connexion de données est fonction d'un signal différentiel basse tension, LVDS.

8. Agencement d'interface de données (140) selon l'une quelconque revendication précédente, dans lequel la seconde connexion de données est fonction d'une connexion de données Gigabit Ethernet, GbE, ou d'une connexion en fonction de BroadR-Reach.

9. Unité de commande électronique, ECU, de véhicule (130) comprenant un agencement d'interface de données (140) selon l'une quelconque revendication précédente.

10. Procédé de transfert de données entre un système de capteur de véhicule et un dispositif d'analyse externe (150), le procédé comprenant ;
la configuration (S1) d'un agencement d'interface de données comprenant une première connexion de données (141) agencée pour transporter des données de signal de capteur échantillonnées et une seconde connexion de données (142) agencée pour transporter des données d'état d'unité de commande électronique, ECU, dans lequel l'ECU comprend une pluralité de fonctions de traitement de signal, telles que des fonctions de filtrage et de suivi, dans lequel les données de signal de capteur échantillonnées comprennent des données de signal radar ou lidar échantillonnées, et les données de signal de capteur échantillonnées comprennent un bruit et/ou une interférence,
l'entrelacement (S2) des segments de synchronisation avec les données d'état d'ECU sur la seconde connexion de données (142), dans lequel les segments de synchronisation correspondent à des segments respectifs des données de signal de capteur échantillonnées, et
la synchronisation temporelle (S3) des données de signal de capteur échantillonnées et des données d'état d'ECU en fonction des segments de synchronisation entrelacés.
